# EUROPÄISCHE PATENTSCHRIFT

(11) **EP 2 094 953 B1**
(45) Veröffentlichungstag und Bekanntmachung des Hinweises auf die Patenterteilung: **23.06.2010**
(21) Anmeldenummer: 07847186.9
(22) Anmeldetag: 15.11.2007
(51) Int. Cl.: F01N 3/20

(54) **VORRICHTUNG ZUM DOSIEREN EINES FLÜSSIGEN REDUKTIONSMITTELS**
DEVICE FOR METERING A LIQUID REDUCING AGENT
DISPOSITIF DE DOSAGE D'AGENT DE RÉDUCTION LIQUIDE

(30) Priorität: 28.12.2006 DE 102006061732
(43) Veröffentlichungstag der Anmeldung: 02.09.2009
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE); KRAUSE, Michael, 67705 Trippstadt (DE)
(86) Internationale Anmeldenummer: PCT/EP2007/062416
(87) Internationale Veröffentlichungsnummer: WO 2008/080691

(56) Entgegenhaltungen:
- EP-A- 0 928 884
- EP-A- 1 683 967
- WO-A-2004/047963
- WO-A-2006/135803
- DE-A1- 4 432 577
- DE-A1- 10 346 220

## Beschreibung

### Stand der Technik

Die Erfindung geht aus von bekannten Vorrichtungen zum Dosieren flüssiger Reduktionsmittel oder anderer schadstoffvermindernder Flüssigkeiten in ein Abgassystem. Derartige Vorrichtungen werden beispielsweise in der Kraftfahrzeugindustrie eingesetzt, um Schadstoffe in einem Abgas einer Verbrennungskraftmaschine zu vermindern. Weiterhin betrifft die Erfindung ein Verfahren zum Betrieb der Vorrichtung zum Dosieren des flüssigen Reduktionsmittels.

Bei Verbrennungskraftmaschinen, insbesondere bei Diesel-betriebenen Verbrennungskraftmaschinen, muss aufgrund der in den nächsten Jahren anstehenden verschärften Abgasgesetzgebung unter anderem der Anteil an Stickoxiden im Abgas reduziert werden. Zur Reduzierung des Stickoxid-Anteils im Abgas wird zum Beispiel eine selektive katalytische Reduktion (SCR) durchgeführt, bei der die Stickoxide mit Hilfe von Reduktionsmitteln zu Stickstoff und Wasser reduziert werden. Als Reduktionsmittel wird zum Beispiel eine wässrige Harnstofflösung eingesetzt. Auch andere Verfahren zur chemischen Verminderung von Schadstoffen sind bekannt.

Bei der SCR wird das Reduktionsmittel üblicherweise in einem Tank gelagert und über eine Leitung vom Tank zu einem Dosiermodul befördert. Mit dem Dosiermodul wird das Reduktionsmittel zum Beispiel in ein Abgasrohr, beispielsweise im Bereich eines Katalysators, eingespritzt.

Eine derartige Gemischabgabevorrichtung zur Einführung eines Reduktionsmittels in ein Abgassystem einer Brennkraftmaschine ist in EP 0 928 884 A2 beschrieben. Dabei wird eine Harnstoff-Wasser-Lösung mittels einer Pumpe unter Druck und Zugabe von Druckluft vor einem Katalysator eingebracht, um die Reduktion von Stickoxiden im Abgas zu bewirken. Neben einem Reduktionsmittelverbrauchsbehälter weist die dargestellte Vorrichtung auch einen Reduktionsmittelvorratsbehälter auf, aus welchem über eine mit einem Rückschlagventil ausgestattete Leitung Harnstoff-Wasser-Lösung in dem Reduktionsmittelverbrauchsbehälter nachgefüllt werden kann.

Aufgrund der harten Umgebungsbedingungen, unter welchen die Systeme in der Praxis eingesetzt werden müssen, stehen die bekannten Systeme jedoch zahlreichen Herausforderungen gegenüber, welche teilweise bislang eine hohe Systemkomplexität bedingen. Eine Schwierigkeit besteht beispielsweise darin, dass in vielen Fällen ein Umpumpen des Reduktionsmittels mit hohem Aufwand verbunden ist. Wird beispielsweise eine Fördereinrichtung sowohl zum Dosieren als auch zum Umpumpen von flüssigem Reduktionsmittel zwischen Lagerbehälter und Arbeitsbehälter verwendet, so ist dieses Umpumpen entweder nur mittels einer komplexen Steuerung möglich, oder in einem Nachlauf des Systems, d. h. wenn das Fahrzeug abgestellt ist. Letzterer Vorgang dauert mehrere Minuten, wobei in vielen Fällen eine hohe Geräuschentwicklung auftritt.

Weiterhin stellt die mittlerweile regelmäßig geforderte Fehlererkennung im Sinne einer so genannten On-Board-Diagnose (OBD) hohe Herausforderungen an die Systeme. Insbesondere die Verbindung zwischen Lagerbehälter und Arbeitsbehälter muss dabei überwacht werden, was bei einer Kopplung von Dosierkreis und Umpumpkreis nicht immer einfach ist. So sind üblicherweise im Umpumpkreis Ventile aufgenommen, welche nur schwer zu überwachen sind, so dass es bei Undichtigkeiten derartiger Ventile im Normalbetrieb zu einem Überfüllen des Lagerbehälters kommen kann.

Eine weitere Herausforderung stellt insbesondere der Temperaturbereich, in welchem die Systeme üblicherweise eingesetzt werden. Spezifikationen erfordern eine Betriebssicherheit der Systeme bis hinunter zu Temperaturen von ca. -40 °C. Je nach Ausgestaltung des Reduktionsmittels, insbesondere je nach Zugabe von Frostschutzmitteln, liegt der Festpunkt der flüssigen Reduktionsmittel (zum Beispiel für eine Harnstoff-Wasser-Lösung) jedoch weit oberhalb dieser Temperatur, beispielsweise bei ca. -11 °C. Dementsprechend müssen die Systeme eisdruckfest ausgestaltet sein, was bei bekannten Systemen üblicherweise nur durch aufwendige Beheizungen der Leitungen realisierbar ist. Beispielsweise muss in der Regel die Verbindungsleitung zwischen Lagerbehälter und Arbeitsbehälter beheizt ausgestaltet sein. Ventile, welche in dieser Leitung aufgenommen sind, müssen in der Regel eisdruckfest gewählt werden, was nicht in allen Fällen ohne größeren technischen Aufwand möglich ist.

Die DE 4432577 beschreibt eine Einrichtung zur Einbringung einer Flüssigkeit in ein Strömungsmedium mit zwei Vorratsbehältern, die über eine beheizte Leitung miteinander verbunden sind.

### Vorteile der Erfindung

Es wird dementsprechend eine Vorrichtung zum Dosieren eines flüssigen Reduktionsmittels in ein Abgassystem vorgeschlagen, welche die oben beschriebenen Nachteile des Standes der Technik vermeidet.

Die vorgeschlagene Vorrichtung kann beispielsweise im Rahmen der oben beschriebenen Schadstoffverminderung im Rahmen von SCR-Verfahren eingesetzt werden. Anstelle eines flüssigen Reduktionsmittels im eigentlichen Sinne können auch andere schadstoffvermindernde fluide Medien eingesetzt werden.

Die beschriebene Vorrichtung weist mindestens einen Arbeitsbehälter zur Bevorratung einer Arbeitsmenge des flüssigen Reduktionsmittels, mindestens ein Dosiermodul, mindestens eine Förderleitung und mindestens eine Förderpumpe auf. Einzelne Komponenten können auch mehrfach vorhanden sein, beispielsweise mehrere Arbeitsbehälter im Rahmen einer Vorrichtung zum Mischen fluider Medien. Die Förderpumpe ist vorzugsweise als Membranpumpe ausgebildet, da derartige Pumpen prinzipbedingt eisdruckfest sind. Die Förderleitung kann ganz oder teilweise beheizt ausgebildet sein. In der Förderleitung ist mindestens ein ein 4/2-Wege-Ventil umfassendes Umkehrventil aufgenommen, welches ausgestaltet ist, um bei einer Förderrichtung der Förderpumpe eine Strömungsrichtung durch die Förderleitung zumindest teilweise umzukehren. Auf diese Weise kann die Vorrichtung beispielsweise derart betrieben werden, dass in einem Normalbetrieb flüssiges Reduktionsmittel durch die Förderpumpe von dem Arbeitsbehälter zum Dosiermodul befördert wird, beispielsweise um den oben beschriebenen SCR-Prozess durchzuführen. Nach einem Abschalten des Normalbetriebs, oder auch in einem Zustand, in welchem die Vorrichtung kontrolliert auf einen Ruhezustand vorbereitet wird, kann beispielsweise ein Nachlauf der Förderpumpe genutzt werden, um die Förderleitung in den Arbeitstank zu entleeren und ganz oder teilweise zu belüften. Auf diese Weise wird, auch ohne aufwendige Maßnahmen, eine hohe Eisdruckfestigkeit erreicht.

Zusätzlich zu dem mindestens einen Arbeitsbehälter ist mindestens ein Lagerbehälter zur Bevorratung einer Lagermenge des flüssigen Reduktionsmittels vorgesehen, welche vorzugsweise die im Arbeitsbehälter maximal speicherbare Arbeitsmenge übersteigt. Typischerweise weist der Arbeitsbehälter ein Fassungsvermögen im Bereich von 1 bis 15 Litern auf, beispielsweise im Bereich zwischen 5 bis 8 Litern und besonders bevorzugt bei ca. 6 Litern. Der Lagerbehälter weist ein Fassungsvermögen zwischen 15 Litern und 100 Litern, vorzugsweise im Bereich zwischen 20 und 50 Litern, und besonders bevorzugt bei ca. 30 Litern auf.

Der Lagerbehälter ist mit dem Arbeitsbehälter über mindestens eine Lagerleitung verbunden, in welcher eine Lagerpumpe zum Umpumpen von flüssigem Reduktionsmittel aufgenommen ist. Dabei wird vorteilhafterweise als Lagerpumpe eine Membranpumpe verwendet, da dieses Pumpenprinzip eine hohe Eisdruckfestigkeit aufweist.

Vorteilhafterweise ist also die Lagerleitung als separate hydraulische Verbindung zwischen dem Lager- und Arbeitsbehälter ausgestaltet. Somit ist eine Überwachung dieser hydraulischen Verbindung, welche vorzugsweise keine Ventile aufweist, auf einfache Weise zu realisieren. Damit genügt diese vorteilhafte Weiterbildung der Erfindung auch den Anforderungen an eine On-Board-Diagnose, da diese leicht zu überwachen ist. Der Umpumpvorgang kann während des Betriebs der Vorrichtung (also während eines Dosieren des flüssigen Reduktionsmittels) erfolgen. Als Lagerpumpe kann beispielsweise wiederum eine Membranpumpe verwendet werden, welche prinzipbedingt eisdruckfest ist. In diesem Fall kann aufgrund der Eisdruckfestigkeit der Membranpumpe auch die hydraulische Leitung zwischen Lager- und Arbeitsbehälter unbeheizt ausgeführt werden, da diese nicht gleichzeitig für den Dosierbetrieb verwendet werden muss, und da, insbesondere bei Verwendung der oben beschriebenen Volumina, das im Arbeitsbehälter enthaltene Reduktionsmittelvolumen für einen längeren Betrieb, beispielsweise einen Betrieb über eine Frostperiode hinweg, ausreicht. Der Umpumpvorgang kann beispielsweise über eine separate Steuervorrichtung erfolgen, welche, beispielsweise mittels mindestens eines Sensors, einen Füllstand des flüssigen Reduktionsmittels im Arbeitsbehälter umfasst. Die Steuervorrichtung kann beispielsweise auf eine Drehzahl der Lagerpumpe einwirken.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine Vorrichtung zum Dosieren eines flüssigen Reduktionsmittels mit einem Arbeitsbehälter und einem Umkehrventil in Form eines 4/2-Wege-Ventils;
- Figur 2: eine erfindungsgemäße Vorrichtung mit einem 2-Tank-System; und
- Figur 3: die in Figur 2 dargestellte Vorrichtung im Entlüftungsbetrieb.

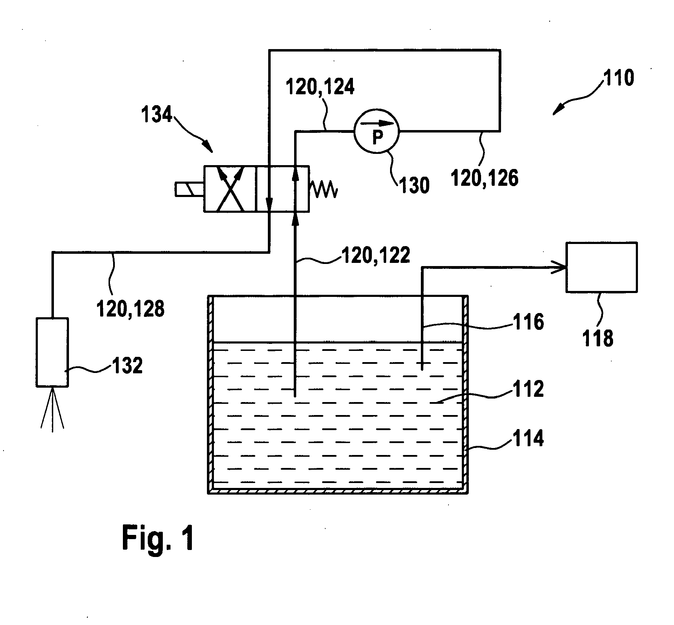

In Figur 1 ist ein Beispiel einer Vorrichtung 110 zum Dosieren eines flüssigen Reduktionsmittels 112 dargestellt. Das flüssige Reduktionsmittel 112 ist dabei in einem Arbeitsbehälter 114 aufgenommen, welcher beispielsweise mit Füllstandsensoren 116 zur Überwachung der Flüssigkeitsmenge im Arbeitsbehälter 114 ausgestattet sein kann. Die Daten der Füllstandsensoren 116 können beispielsweise an eine Steuervorrichtung 118 übermittelt werden, beispielsweise einen Mikrocomputer, beispielsweise um entsprechende Warnsignale zu erzeugen, wenn der Arbeitsbehälter 114 nachgefüllt werden muss.

Weiterhin ist eine Förderleitung 120 vorgesehen, welche in diesem Fall die Teilabschnitte 122, 124, 126 und 128 aufweist. In der Förderleitung ist eine Förderpumpe 130 aufgenommen, welche flüssiges Reduktionsmittel 112 aus dem Arbeitsbehälter 114 durch die Förderleitung 120 zu einem Dosiermodul 132 befördert. Beispielsweise kann es sich bei diesem Dosiermodul 132 um ein Einspritzventil zum Einspritzen des flüssigen Reduktionsmittels in einen Abgastrakt handeln, beispielsweise ein druckgesteuertes Einspritzventil. Derartige Einspritzventile sind beispielsweise auch in EP 0 928 884 A2 sowie dem darin beschriebenen Stand der Technik aufgeführt, so dass auf die genaue Ausgestaltung hier nicht eingegangen werden soll. Neben einer unmittelbaren Eindüsung des flüssigen Reduktionsmittels 112 kommt auch eine Eindüsung unter Beimischung von Zusatzstoffen oder Gasen in Betracht.

Weiterhin ist in der Förderleitung 120 ein Umkehrventil 134 aufgenommen. Dieses Umkehrventil ist in der dargestellten Ausgestaltung als 4/2-Wege-Ventil ausgestaltet und weist also vier Eingänge auf. Jeder der oben beschriebenen Teilabschnitte 122 bis 128 der Förderleitung 120 ist mit einem der Eingänge verbunden.

Im Normalbetrieb der Vorrichtung 110 ist der erste Teilabschnitt 122 mit dem zweiten Teilabschnitt 124 verbunden, und der dritte Teilabschnitt 126 mit dem vierten Teilabschnitt 128. Auf diese Weise kann über die Förderpumpe 130 flüssiges Reduktionsmittel aus dem Arbeitstank 114 zum Dosiermodul 132 gepumpt werden, um dort in das Abgas eingedüst zu werden.

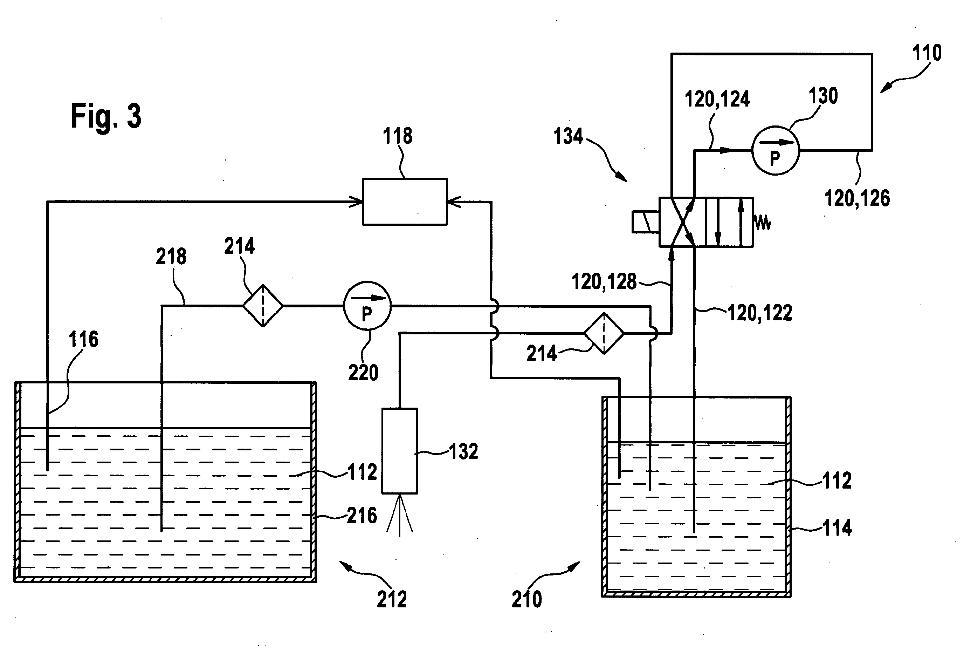

Nach Abstellen des Fahrzeugs weist die Förderpumpe 130 einen Nachlauf auf. Dieser Nachlauf (welcher gegebenenfalls auch künstlich verlängert werden kann, beispielsweise durch einen kurzfristigen Weiterbetrieb der Förderpumpe 130) kann gezielt genutzt werden, um das hydraulische System der Vorrichtung 110 mit Abgas aus dem Abgastrakt zu belüften. Zu diesem Zweck sei auf die Darstellung in Figur 3 verwiesen, welche das Umkehrventil 134 in der entsprechenden Schaltstellung für die Belüftung zeigt. In dieser Schaltstellung ist der Teilabschnitt 122 mit dem Teilabschnitt 126 verbunden, und der Teilabschnitt 124 mit dem Teilabschnitt 128. Da die Förderpumpe 130 ihre Pumprichtung nicht umgekehrt hat, wird nunmehr die Förderrichtung in den Teilabschnitten 128 und 122 umgekehrt, so dass noch in der Förderleitung 120 befindliches flüssiges Reduktionsmittel 112 zurück in den Arbeitsbehälter 114 gepumpt wird. Anschließend wird Abgas, beispielsweise über die Düsenöffnungen des Dosiermoduls 132, aus dem Abgassystem (nicht dargestellt) in die Förderleitung 120 gepumpt und diese somit mit Abgas belüftet. Auf diese Weise wird die Vorrichtung 110 beispielsweise auf einen Stillstand des Fahrzeugs bei tiefen Temperaturen (beispielsweise bei Temperaturen unterhalb von -11 °C) vorbereitet. Diese Ausgestaltung verleiht der Vorrichtung 110 und den Einzelkomponenten eine hohe Eisdruckfestigkeit.

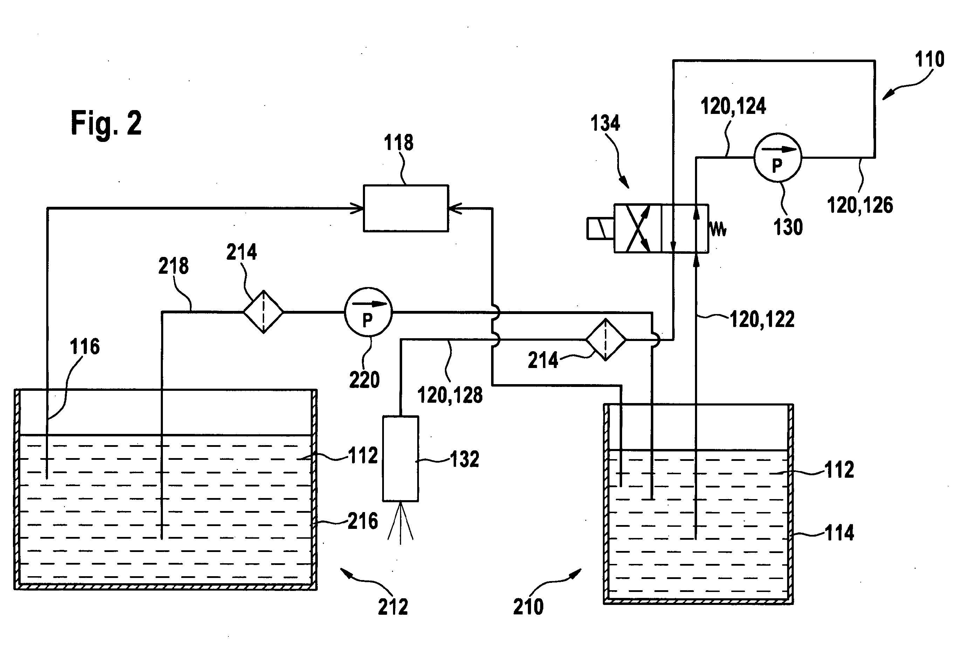

In den Figuren 2 und 3 ist eine erfindungsgemäß weiterentwickelte Ausgestaltung der Vorrichtung 110 gemäß Figur 1 dargestellt. Die Vorrichtung 110 weist jedoch, im Gegensatz zu Figur 1, ein Arbeitssystem 210 und ein Lagersystem 212 auf. Das Arbeitssystem 210 ist im Wesentlichen ausgestaltet wie die Vorrichtung 110 gemäß Figur 1 und weist wiederum einen Arbeitsbehälter 114, eine Förderleitung 120, eine Förderpumpe 130, ein Umkehrventil 134 und ein Dosiermodul 132 auf. Weiterhin ist wiederum ein Füllstandsensor 116 und eine Steuervorrichtung 118 vorgesehen. Dementsprechend kann auf die Ausgestaltung der einzelnen Elemente weitgehend auf die Beschreibung zu Figur 1 verwiesen werden. Die Darstellung in Figur 2 zeigt das Umkehrventil 134 im Normalbetrieb, also in einer Schaltstellung, welche der Schaltstellung des Umkehrventils 134 in Figur 1 entspricht. Demgegenüber zeigt Figur 3 das Umkehrventil 134 in der zweiten Schaltstellung, also in einer Belüftungs-Schaltstellung, welche ebenfalls oben anhand Figur 1 beschrieben wurde. Die Figuren 2 und 3 werden daher im Nachfolgenden gemeinsam beschrieben.

Im Unterschied zu Figur 1 weist die Vorrichtung 110 gemäß Figur 2 weiterhin im Teilabschnitt 128 der Förderleitung 120 ein Filter 214 auf. Dieses Filter 214 kann im Wesentlichen dazu dienen, um eine Verstopfung des Dosiermoduls 132, beispielsweise durch Partikel oder Eiskristalle, zu verhindern. Daneben oder alternativ können auch in weiteren Teilabschnitten Filter vorgesehen sein. Auch die in Figur 1 dargestellte Vorrichtung 110 kann mit entsprechenden Filtern 214 ausgestaltet werden.

Neben dem Arbeitssystem 210 ist die Vorrichtung gemäß den Figuren 2 und 3 gegenüber der Darstellung in Figur 1 im Wesentlichen durch die Hinzufügung des Lagersystems 210 weitergebildet. Dieses Lagersystem 210 weist einen Lagerbehälter 216 auf. Dieser ist vorzugsweise mit einem größeren maximalen Füllvolumen ausgestattet als der Arbeitsbehälter 114 und dient zur Bevorratung einer Lagermenge des flüssigen Reduktionsmittels 112. Im Gegensatz zum Arbeitsbehälter 114, welcher vorzugsweise für den Betrieb bei niedrigen Temperaturen als beheizter Arbeitsbehälter ausgestaltet ist, kann der Lagerbehälter 216 als unbeheizter Behälter ausgestaltet sein. In diesem Fall wird ein Einfrieren des flüssigen Reduktionsmittels 112 gezielt in Kauf genommen, da vorzugsweise der Arbeitsbehälter 114 ausgestaltet ist, um mit der darin bevorrateten Arbeitsmenge das Kraftfahrzeug während einer Kälteperiode zu versorgen. Wie der Arbeitsbehälter 114 ist auch der Lagerbehälter 216 mit einem Füllstandsensor 116 ausgestattet, welcher beispielsweise wiederum Signale an die Steuervorrichtung 118 liefert, so dass zum Beispiel Warnmeldungen bei niedrigem Füllstand des Lagerbehälters 216 ausgegeben werden können.

Der Lagerbehälter 216 ist mit dem Arbeitsbehälter 114 über eine Lagerleitung 218 verbunden. Über diese Lagerleitung 218 kann der Arbeitsbehälter 114 aus dem Lagerbehälter 216 mit flüssigem Reduktionsmittel 112 versorgt werden. Die Lagerleitung 218 bildet somit einen separaten Hydraulikpfad, welcher mit der Förderleitung 120 des Arbeitssystems 210 nicht in Verbindung steht.

Um das Umpumpen vom Lagerbehälter 216 in den Arbeitsbehälter 114 im Normalbetrieb der Vorrichtung 110 zu gewährleisten, ist in der Lagerleitung 218 eine Lagerpumpe 220 vorgesehen, welche als Einfachpumpe ausgestaltet ist. Unter einer Einfachpumpe ist dabei eine Pumpe zu verstehen, bei welcher lediglich geringe Anforderungen an die Lebensdauer zu stellen sind, beispielsweise eine Pumpe mit einem Bürstenmotor. Vorzugsweise wird als Lagerpumpe 220 wiederum eine Membranpumpe verwendet, da diese prinzipbedingt eisdruckfest ist. Wiederum ist in der Lagerleitung 218 ein Filter 214 aufgenommen, welcher dem Schutz der Lagerpumpe 220 dient.

Das Umpumpen, also die Förderung von flüssigem Reduktionsmittel 112 vom Lagerbehälter 216 in den Arbeitsbehälter 114, wird in diesem Beispiel je nach Flüssigkeitsstand im Arbeitsbehälter 114 gesteuert. Dementsprechend kann die Steuervorrichtung 118, welche über Füllstandssignale des Arbeitsbehälters 114 verfügt, entsprechend auf die Lagerpumpe 220 einwirken. Beispielsweise kann bei niedrigem Füllstand durch die Steuervorrichtung 118 die Lagerpumpe 220 ein- oder ausgeschaltet werden. Alternativ ist auch eine stufenlose Regelung, beispielsweise eine Drehzahl der Lagerpumpe 220, denkbar.

Aufgrund der getrennten Hydraulikpfade ist in dem in den Figuren 2 und 3 gezeigten Beispiel das hydraulische System des Arbeitssystems 210 und das hydraulische System des Lagersystems 212 voneinander getrennt. Dies erleichtert eine getrennte Diagnose beider Systeme 210, 212 erheblich, was im Rahmen einer On-Board-Diagnose genutzt werden kann. Dementsprechend können zusätzliche Sensoren vorgesehen sein, um beispielsweise Leckagen zu überwachen. Weiterhin sind die Umpumpgeräusche bei der in den Figuren 2 und 3 dargestellten Variante gegenüber herkömmlichen Systemen vernachlässigbar. Da die Lagerpumpe 220 vorzugsweise als Membranpumpe ausgebildet ist, welche eisdruckfest ist, kann auch die Lagerleitung 218 unbeheizt ausgeführt werden.

## Patentansprüche

1. Vorrichtung (110) zum Dosieren eines flüssigen Reduktionsmittels (112) in ein Abgassystem, insbesondere zur Reduzierung von Stickoxiden in einem Abgas, umfassend mindestens einen Arbeitsbehälter (114) zur Bevorratung einer Arbeitsmenge des flüssigen Reduktionsmittels (112), mindestens ein Dosiermodul (132), mindestens eine Förderleitung (120) und mindestens eine Förderpumpe (130), weiterhin umfassend mindestens einen Lagerbehälter (216) zur Bevorratung einer Lagermenge des flüssigen Reduktionsmittels (112), vorzugsweise einer die Arbeitsmenge übersteigenden Lagermenge, wobei der Lagerbehälter (216) mit dem Arbeitsbehälter (114) über mindestens eine Lagerleitung (218) verbunden ist, **gekennzeichnet durch** mindestens eine in der Lagerleitung (218) aufgenommene Lagerpumpe (220) zum Umpumpen von flüssigem Reduktionsmittel (112) vom Lagerbehälter (216) zum Arbeitsbehälter (114), wobei mindestens ein in der Förderleitung (120) aufgenommenes Umkehrventil (134) vorgesehen ist, welches ausgestaltet ist, um eine Strömungsrichtung **durch** die Förderleitung (120) zumindest teilweise umzukehren, wobei das Umkehrventil (134) ein 4/2-Wege-Ventil umfasst, und wobei ein erster der Eingänge des 4/2-WegeVentils mit dem Arbeitsbehälter (114) verbunden ist, wobei ein zweiter der Eingänge des 4/2-Wege-Ventils mit dem Dosiermodul (132) verbunden ist und wobei jeweils ein dritter und ein vierter der Eingänge des 4/2-Wege-Ventils mit zwei verschiedenen Enden der Förderpumpe (130) verbunden sind.

2. Vorrichtung (110) gemäß dem vorhergehenden Anspruch, **dadurch gekennzeichnet, dass** die Lagerpumpe (220) eine Membranpumpe aufweist.

3. Vorrichtung (110) gemäß einem der beiden vorhergehenden Ansprüche, **gekennzeichnet durch** eine Steuervorrichtung (118), wobei die Steuervorrichtung (118) mindestens einen Sensor (116) zur Erfassung eines Füllstandes des flüssigen Reduktionsmittels (112) in dem Arbeitsbehälter (114) umfasst, wobei die Steuervorrichtung (118) eingerichtet ist, um das Umpumpen des flüssigen Reduktionsmittels (112) von dem Lagerbehälter (216) in den Arbeitsbehälter (114) entsprechend dem Füllstand des Arbeitsbehälters (114) zu steuern.

4. Vorrichtung (110) gemäß einem der vorhergehenden Ansprüche, **dadurch gekennzeichnet, dass** die Lagerleitung (218) ventilfrei ausgestaltet ist.

5. Vorrichtung (110) gemäß einem der vorhergehenden Ansprüche, **dadurch gekennzeichnet, dass** die Förderpumpe (130) eine Membranpumpe aufweist.

## Claims

1. Device (110) for metering a liquid reducing agent (112) into an exhaust system, in particular for the reduction of nitrogen oxides in an exhaust gas, comprising at least one working tank (114) for storing a working quantity of the liquid reducing agent (112), at least one metering module (132), at least one feed line (120) and at least one feed pump (130), also comprising at least one storage tank (216) for storing a storage quantity of the liquid reducing agent (112), preferably a storage quantity which exceeds the working quantity, with the storage tank (216) being connected to the working tank (114) via at least one storage line (218), **characterized by** at least one storage pump (220), which is accommodated in the storage line (218), for pumping liquid reducing agent (112) from the storage tank (216) to the working tank (114), with at least one reversing valve (134) being provided which is accommodated in the feed line (120) and which is designed to at least partially reverse a flow direction through the feed line (120), with the reversing valve (134) comprising a 4/2-way valve, and with a first of the inlets of the 4/2-way valve being connected to the working tank (114), with a second of the inlets of the 4/2-way valve being connected to the metering module (132) and with in each case a third and a fourth of the inlets of the 4/2-way valve being connected to two different ends of the feed pump (130).

2. Device (110) according to the preceding claim, **characterized in that** the storage pump (220) has a diaphragm pump.

3. Device (110) according to one of the two preceding claims, **characterized by** a control device (118), with the control device (118) comprising at least one sensor (116) for detecting a filling level of the liquid reducing agent (112) in the working tank (114), with the control device (118) being set up to control the pumping of the liquid reducing agent (112) from the storage tank (216) into the working tank (114) according to the filling level of the working tank (114).

4. Device (110) according to one of the preceding claims, **characterized in that** the storage line (218) is formed without a valve.

5. Device (110) according to one of the preceding claims, **characterized in that** the feed pump (130) has a diaphragm pump.

## Revendications

1. Dispositif (110) pour doser un agent réducteur liquide (112) dans un système de gaz d'échappement, notamment pour la réduction d'oxydes d'azote dans un gaz d'échappement, comprenant au moins un récipient de travail (114) pour le stockage d'une quantité de travail de l'agent réducteur liquide (112), au moins un module de dosage (132), au moins une conduite de transport (120) et au moins une pompe de refoulement (130), et comprenant en outre au moins un réservoir de stockage (216) pour le stockage d'une quantité de stockage d'agent réducteur liquide (112), de préférence d'une quantité de stockage dépassant la quantité de travail, le réservoir de stockage (216) étant connecté au récipient de travail (114) par le biais d'au moins une conduite de stockage (218), **caractérisé par** au moins une pompe de stockage (220) reçue dans la conduite de stockage (218) pour faire circuler l'agent réducteur liquide (112) du récipient de stockage (216) au récipient de travail (114), au moins une soupape d'inversion (134) reçue dans la conduite de transport (120) étant prévue, laquelle est configurée de manière à inverser au moins en partie un sens d'écoulement à travers la conduite de transport (120), la soupape d'inversion (134) comprenant une soupape à 4/2 voies, et une première des entrées de la soupape à 4/2 voies étant connectée au récipient de travail (114), une deuxième des entrées de la soupape à 4/2 voies étant connectée au module de dosage (132) et à chaque fois une troisième et une quatrième des entrées de la soupape à 4/2 voies étant connectées à deux extrémités différentes de la pompe de refoulement (130).

2. Dispositif (110) selon l'une quelconque des revendications précédentes, **caractérisé en ce que** la pompe de stockage (220) présente une pompe à membrane.

3. Dispositif (110) selon l'une quelconque des deux revendications précédentes, **caractérisé par** un dispositif de commande (118), le dispositif de commande (118) comprenant au moins un capteur (116) pour détecter un niveau de remplissage de l'agent réducteur liquide (112) dans le récipient de travail (114), le dispositif de commande (118) étant prévu pour commander la circulation de l'agent réducteur liquide (112) depuis le réservoir de stockage (216) dans le récipient de travail (114) en fonction du niveau de remplissage du récipient de travail (114).

4. Dispositif (110) selon l'une quelconque des revendications précédentes, **caractérisé en ce que** la conduite de stockage (218) est configurée sans soupape.

5. Dispositif (110) selon l'une quelconque des revendications précédentes, **caractérisé en ce que** la pompe de refoulement (130) présente une pompe à membrane.
